# EUROPEAN PATENT SPECIFICATION

(11) **EP 0 934 003 B1**
(45) Date of publication and mention of the grant of the patent: **26.09.2001**
(21) Application number: 97911870.0
(22) Date of filing: 20.10.1997
(51) Int. Cl.: A23B 4/02, A23L 1/318

(54) **METHOD OF DRY CURING AND PROCESSING FULLY COOKED BACON DERIVED FROM PORK BELLIES**
VERFAHREN ZUR TROCKENPÖKELUNG UND VERARBEITUNG VON VOLLSTÄNDIG GEKOCHTEM BACON AUS SCHWEINEBÄUCHEN
PROCEDE DE SALAGE A SEC ET DE TRAITEMENT D'UN LARD ENTIEREMENT CUIT OBTENU A PARTIR DE FLANCS DE PORC

(30) Priority: 21.10.1996 US 734700
(43) Date of publication of application: 11.08.1999
(73) Proprietor: OSI Industries, Inc., Aurora, IL 60507-2018 (US)
(72) Inventor: AFMAN, Brent, J., Hammond, IN 46323 (US); STEVENSON, Craig, L., Bellevue, NE 68123 (US)
(74) Representative: Lawrence, John Gordon
(86) International application number: US9719116
(87) International publication number: WO9817121

(56) References cited:
- EP-A- 0 666 030
- US-A- 4 957 756
- US-A- 5 472 722
- E. SCHIFFNER ET AL.: "Die Herstellung von Kochschinken und Formschinken unter bakteriellem Schutz" FLEISCH, vol. 36, no. 3, 1982, pages 53-57, XP002054661
- P. MATTSON ET AL.: "Bacon precooked by microwaves offers the potential of lowering nitrosamine levels" FOOD PRODUCT DEVELOPMENT, vol. 12, no. 4, 1978, page 47 XP002054662
- N.G. MARRIOTT ET AL.: "Accelerated dry curing of pork legs (hams): a review" JOURNAL OF MUSCLE FOODS, vol. 3, no. 2, 1992, US, pages 159-168, XP002054663

## Description

### Technical Field

The present invention generally relates to curing and processing pork bellies to produce bacon and, in particular, to a novel method of processing pork bellies into fully cooked bacon without need of smokehouse treatment.

### Background of the Invention

The term "bacon" broadly defines a category of cured and processed pork bellies. Most commonly, pork bellies are cured and processed into strip form bacon or circular form. The weight and yield of bacon is precisely defined by federal regulation. For example, for cured pork bellies to be labeled as "uncooked" bacon, the cured pork bellies must have a weight not exceeding the weight of uncured pork bellies. Similarly, for cured pork bellies to be labeled as "cooked" or "precooked" bacon, the cured pork bellies must have a yield not more than 40% the weight of uncured pork bellies, i.e. 60% shrinkage from the initial weight of the pork belly, also known as the "green weight" is required.

The traditional process of curing pork bellies to create a bacon product entails the infusion of a dry cure or liquid pickle solution into the pork bellies. Infusion of the pickle solution creates an infusion weight that exceeds green weight. Depending on manufacturing capabilities and customer preference, infusion weight may be anywhere from 105% to 115% of green weight. To meet the regulatory product definitions of either uncooked or cooked bacon, a degree of weight loss must occur equal to or greater than the added weight of the injected pickle solution, i.e. the finished weight must be equal to or less than the meat portion prior to the injection of the pickle solution. Hence, to obtain the necessary weight reduction to meet the regulatory product definitions for bacon, the prior art has subjected the infused pork bellies to a prolonged low temperature cook cycle.

Historically, this slow cooking took place in smokehouses which achieved the necessary weight reduction and also imparted a smoke flavor characteristic of bacon. Modern techniques employ cooking ovens which heat the product to a core temperature of 60°C (140°F) during a 4 to 5 hour cook cycle. This slow, low temperature heating produces a 10% - 15% loss of injected weight without reaching temperatures to fully cook the pork bellies. The "smokehouse" treatment cooks-off the liquid portion of the pickle solution leaving behind the seasoning carried in the liquid thus curing the pork bellies and imparting the characteristic bacon taste. After the smokehouse treatment, the cured pork bellies are substantially fluid free.

Because of the use of modern slow cooking ovens, the smoke flavor is now produced in different ways. For circular bacon, created by two individual pork bellies cold formed together and encased within a casing, a smoke flavoring agent is added to the pickle solution. With strip bacon, the entire pork belly may also be subject to an atomized spray of smoke flavoring agent within the cooking chamber of the oven.

For fresh bacon, the "smokehouse" treatment causes adequate weight reduction to return the cured pork belly to green weight and therefore within the regulatory product definition for fresh bacon. After the smokehouse treatment, cured pork bellies intended to be sold as fresh bacon are weighed to assure the necessary loss of 10% weight from infused weight. Next, the internal temperatures of the cured pork bellies are chilled from 60°C (140°F) to -1°C (30°F) to facilitate slicing. The product is sliced and then packaged.

However, for fully cooked bacon, additional weight reduction of at least another 60% from green weight is necessary to bring the product with the regulatory definition for "cooked" bacon. After completion of the smokehouse treatment, cured pork bellies intended to be sold as cooked are weighed to assure loss of at least 10% weight from infused weight. Whether in circular form or strip form, the internal temperatures of the cured pork bellies are chilled from about 60°C (140°F) to -1°C (30°F). Again, such chilling is done to facilitate slicing. The bellies are sliced and then further cooked, typically in microwave ovens for about 1 ½ to 2 minutes depending on microwave amperage, conveyor belt speed through the microwave ovens and, the number of microwave cooking cavities being employed. Such further cooking causes the necessary 60% shrinkage to bring the cured and now fully cooked pork bellies with the regulatory definition for fully cooked bacon.

Hence, curing pork bellies intended as "uncooked" bacon uses single step cooking employing solely the smokehouse treatment while cured pork bellies intended as "fully cooked" bacon uses a two step cooking employing both smokehouse treatment and a second cooking step, typically microwave cooking. The prior art teaches that smokehouse treatment was necessary for curing pork bellies whether they were intended to be sold as fresh or fully cooked bacon.

U.S. Patent 4,957,756 to Olander et al. suggests a method of eliminating smokehouse treatment of pork bellies. However, this method requires a lengthy step of holding the pork belly injected with pickle solution for 32 to 42 hours at temperatures of 4.5°C (40°F) to 7°C (45°F). Olander believes that such holding of the injected pork belly is necessary to achieve adequate dispersal of the pickle solution throughout the pork belly. Such a step greatly increases the costs of producing bacon even though smokehouse treatment has been eliminated.

Schiffner, E. et al., Die Herstellung von Kochschinken und Formschinken unter bakteriellem Schutz, Fleisch, Vol. 36, No. 3, 1982, pages 53-57, XP002054661, discloses a method of dry curing ham using a salt consisting of various nitrates followed by tumbling and heating. Although this method does not require smokehouse treatment or injection with liquid pickle solution, the method requires the salted starting meat to remain in a pan at cold-storage temperatures for 12-16 hours. In addition, the tumbling is carried out for 1.5-2 hours and the heating process requires two temperature stages. As a result of the long tumbling and heating time, however, the ham is exposed to potential bacterial contamination. Thus, to increase food safety, the two temperature stages must be carried out under bacterial protection by the addition of starter cultures. There is a fundamental difference between ham and bacon because of the different cut off the hog used for each type of meat product. Accordingly, ham and bacon are processed using significantly different methods.

It is apparent from the above that prior art methods are both time and energy intensive and contribute greatly to the cost of producing bacon. But with the market for fully cooked bacon product gaining in consumer popularity, prior to the development of the present invention, a need existed for methods to cure and process pork bellies into fully cooked bacon by reducing the costs and time associated with a two step cooking cycle and particularly with the smokehouse treatment.

### Summary of the Invention

According to the present invention, a novel method of curing and processing pork bellies into fully cooked bacon has been developed that eliminates both smokehouse treatment and injection of liquid pickle solution into the pork belly. Essentially, the method of the present invention employs a single cooking step that both fully cooks a pork belly coated with a dry cure seasoning, including a smoke flavoring agent, and achieves the necessary weight reduction to meet the regulatory definition for fully cooked bacon. The method of the present invention may be employed for either strip form or circular form bacon.

Generally, the methods of the present invention departs from traditional curing methods by eliminating any infusion into the pork bellies of pickle solution. Because the pork bellies are not injected with a liquid pickle solution, the dry coated pork bellies need not be rapidly chilled to render the pickle solution into a semi-solid as taught in our co-pending application Serial No. 08/437,445. The dry coated pork bellies need only be sliced prior to cooking.

Further, even though the method of the present invention eliminates both smokehouse treatment and pickle solution injection, only a slightly longer single step cooking is employed. Yet, a more than 60% shrinkage from infused weight results sufficient to meet the regulatory definition for fully cooked bacon. The method of the present invention surprisingly results in fully cooked product having the aroma, flavor, texture and appearance of fully cooked bacon produced by smokehouse treatment reduces curing and processing time by an estimated 30-35 hours resulting in dramatic savings.

Other advantages and aspects of the present invention will become apparent from the following detailed description of the invention.

### Detailed Description

While this invention is susceptible of embodiment in many different forms, there is herein described in detail preferred embodiments of the invention with the understanding that the present disclosure is to be considered as an exemplification of the principles of the invention and is not intended to limit the broad aspect of the invention to the embodiments illustrated.

The methods of the present invention are directed to curing and processing pork bellies to produce sliced fully cooked bacon in either strip form or circular form. By coating the surfaces of the pork bellies with a dry cure seasoning, including a dry smoke flavor additive, the pork bellies need not be chilled to cold-set the liquid pickle solution retained within infused pork bellies.

The single step cooking cycle employed by the methods of the present invention are generally no more than about 15% longer than second step cooking cycles known in the art for producing fully cooked bacon. Yet, unexpectedly the single step cooking cycle of the present invention results in substantial shrinkage from green weight to produce a fully cooked product meeting the regulatory definition for "cooked" bacon. Further, single step cooking, preferably by microwave or surface conduction cooking such as by heated conveyor belt surfaces, produces a fully cooked bacon product having all of the color, texture, aroma and flavor characteristic of fully cooked bacon. Hence, the method of the present invention eliminates (1) infusion of a liquid pickle solution into the pork bellies, (2) a 32 hour to 42 hour holding period to achieve pickle solution dispersal throughout the pork belly (3) smokehouse treatment, (4) post-smokehouse weighing of product, and, (5) the need to chill smokehouse treated pork bellies from high internal meat temperatures of 60°C (140°F) to slicing temperatures of -1°C (30°F). The elimination of theses steps results in dramatic savings in processing times and costs.

The following Example describes in more detail the method of the present invention with reference to a preferred commercial processing operation for fully cooked bacon.

### EXAMPLE

### FULLY COOKED SLICED BACON

Pork bellies of a selected weight and size are trimmed in the manner known in the art. As discussed above, the method of the present invention departs from the prior art by eliminating injection of a liquid pickle solution. Instead, a dry cure seasoning having any formulation known in the meat curing art is used. To impart a smoked flavor to the bacon, however, a smoke flavoring agent must be blended into the dry cure seasoning. The pork bellies should be maintained at internal temperatures of 1.5°C (35°F)-4.5°C (40°F). To prepare the pork bellies for coating with the dry cure seasoning, the surface of the pork bellies should be macerated using equipment available from Seffelaar & Looyen, Holland, MI. This increases both the surface area of the pork belly to enhance penetration of the dry cure seasoning.

Next, the dry cure seasoning is added to the macerated pork bellies. This can be accomplished by (1) applying the dry cure seasoning directly to the surface of the pork bellies; (2) adding dry cure seasoning to weighed vats containing pork bellies; or (3) adding dry cure seasoning into a weighed vacuum meat massager. In this latter method, while being tumbled, the pork bellies are dusted with the dry cure seasoning by blowing the composition into the vacuum meat massager. Tumbling continues for a period of 2 to 4 hours at temperatures of about 4.5°C (40°F). Such tumbling also enhances adhesion and bonding together of the pork bellies for producing circular bacon.

The dry coated pork bellies are then further chilled to temperatures of -5.5°C (22°F) to -1°C (30°F) prior to slicing. Such chilling causes the fat within the pork belly to be rendered a semi-solid to facilitate product slicing.

After slicing the product into individual pieces of a commercially acceptable thickness, the slices are then immediately transferred to a cooking device. This device may include a conveyor belt having a heat conductive surface (also known as "belt grilling") or, as preferably practiced, by passing the slices on a conveyor belt through one or more microwave cooking chambers. With reference to the preferred commercial operation herein described, a four cavity Ferrite™ microwave unit was employed. Each cavity is serviced by two transmitters and each set at maximum amperage setting levels of 4.20. This amperage setting achieves a temperature within each microwave cavity of about 104.5°C (220°F). Conveyor belt speeds had to be decreased from 15.24 meters (50 feet)/minute for sliced product that was subject to smokehouse treatment, to 13.97 meters (46 feet)/minute for sliced product processed according to the present invention. Decreased belt speed increased total dwell time within all microwave cooking cavities from approximately 1 minute, 10 seconds to 1 minute, 20 seconds, or about a 15% increase in dwell time.

Sliced product emerging from the microwave cooking chambers possessed the appearance, aroma, taste and texture of product processed according to the prior art two step cooking cycle.

By eliminating the steps of (1) injection of liquid pickle solution, (2) smokehouse treatment, (3) post-smokehouse weighing of product, and, (4) the need to chill smokehouse treated pork bellies from internal meat temperatures of 60°C (140°F) to slicing temperatures of -1°C (30°F), the present invention achieves substantial reductions in cost and processing time for producing fully cooked bacon products. For example by eliminating the 4 to 5 hours necessary for smokehouse treatment, it has been estimated that substantial savings could be achieved in commercial scale production of fully cooked bacon products.

## Claims

1. A method of curing and processing pork bellies to produce fully cooked bacon using a single heat source and omitting smokehouse treatment and liquid marinating solution comprising the steps of:
providing pork bellies of a preselected weight;
coating the pork bellies with a dry cure seasoning;
slicing the pork bellies into a plurality of individual slices;
Exposing the slices to a heat source to rapidly eliminate at least 60% of weight; and
cooking the slices using the same heat source until the slices are fully cooked.

2. The method of Claim 1 further comprising the step of macerating the surface of the pork bellies prior to coating the pork bellies with the dry cure seasoning and tumbling the coated pork bellies, prior to slicing, for a time period and at a temperature sufficient to achieve adequate penetration of the dry cure seasoning.

3. The method of Claim 1 or Claim 2 wherein the dry cure seasoning includes a flavoring agent for imparting a smoke taste to the pork bellies.

4. The method of Claim 1 wherein the heat source comprises a microwave cooking chamber.

5. The method of Claim 1 wherein the slices are exposed to the heat source to rapidly reduce the slices to a finished weight no more than 40% of the preselected weight.

## Patentansprüche

1. Verfahren zum Pökeln und Verarbeiten von Schweinebäuchen zum Erzeugen von vollständig gekochtem Speck unter Verwendung einer einzigen Wärmequelle und unter Auslassung einer Räucherkammerbehandlung und flüssiger Marinierungslösung, welches die Schritte aufweist:
Vorbereiten von Schweinebäuchen von vorgewähltem Gewicht;
Aufbringen eines trockenen Pökelgewürzes auf die Schweinebäuche;
Schneiden der Schweinebäuche in mehrere einzelne Scheiben;
Aussetzen der Scheiben einer Wärmequelle, um rasch wenigstens 60% des Gewichts zu eliminieren; und
Kochen der Scheiben unter Verwendung derselben Wärmequelle, bis die Scheiben vollständig gegart sind.

2. Verfahren nach Anspruch 1, welches weiterhin den Schritt des Erweichens der Oberfläche der Schweinebäuche vor dem Aufbringen des trockenen Pökelgewürzes auf die Schweinebäuche und des Schleuderns der mit dem Pökelgewürz versehenen Schweinebäuche vor dem Schneiden während einer Zeitperiode und bei einer Temperatur, die ausreichend sind, um ein angemessenes Eindringen des trockenen Pökelgewürzes zu erzielen, aufweist.

3. Verfahren nach Anspruch 1 oder 2, worin das trockene Pökelgewürz einen Geschmacksstoff enthält, um den Schweinebäuchen einen Räuchergeschmack zu verleihen.

4. Verfahren nach Anspruch 1, worin die Wärmequelle eine Mikrowellen-Kochkammer aufweist.

5. Verfahren nach Anspruch 1, worin die Scheiben der Wärmequelle ausgesetzt werden, um die Scheiben auf ein Endgewicht von nicht mehr als 40% des vorgewählten Gewichts zu reduzieren.

## Revendications

1. Méthode de salage et de traitement de flancs de porc pour produire du bacon entièrement cuit en utilisant une seule source de chaleur et sans utiliser de traitement dans un fumoir ni de solution de marinade liquide comprenant les étapes consistant à :
(1) se procurer des flancs de porc ayant un poids choisi au préalable ;
(2) enrober les flancs de porc avec une préparation pour salage à sec ;
(3) découper les flancs de porc en plusieurs tranches individuelles ;
(4) exposer les tranches à une source de chaleur pour éliminer rapidement au moins 60 % de leur poids ; et
(5) cuire les tranches en utilisant la même source de chaleur jusqu'à ce que les tranches soient totalement cuites.

2. Méthode selon la revendication 1, comprenant en outre l'étape de macération de la surface des flancs de porc avant leur enrobage avec la préparation pour salage à sec et le passage des flancs de porc enrobés au tonneau, avant découpage, pendant une durée et à une température suffisantes pour que la préparation pour salage à sec pénètre de façon adéquate.

3. Méthode selon la revendication 1 ou la revendication 2, dans laquelle la préparation pour salage à sec contient un agent aromatisant donnant un goût fumé aux flancs de porc.

4. Méthode selon la revendication 1, dans laquelle la source de chaleur comprend une enceinte de cuisson aux micro-ondes.

5. Méthode selon la revendication 1, dans laquelle les tranches sont exposées à la source de chaleur de telle façon que le poids final des tranches soit réduit rapidement à une valeur ne dépassant pas 40 % du poids choisi au préalable.
